# EUROPEAN PATENT SPECIFICATION

(11) **EP 2 636 792 B1**
(45) Date of publication and mention of the grant of the patent: **29.06.2016**
(21) Application number: 12461505.5
(22) Date of filing: 09.03.2012
(51) Int. Cl.: D21H 27/10, B65D 65/46, B65D 81/38, D21H 17/22, D21H 17/28, D21H 19/10, D21H 19/12, D21H 19/34, D21H 19/70, B32B 27/10

(54) **Composition for coating cellulosic packaging material, a method of preparing composition for coating cellulosic packaging material, heat-insulating packaging material, in particular for food products, and a method for preparing heat-insulating material, in particular for food products**
Zusammensetzung zur Beschichtung von cellulosischem Verpackungsmaterial, Verfahren zur Herstellung der Zusammensetzung zur Beschichtung von cellulosischem Verpackungsmaterial, wärmeisolierendes Verpackungsmaterial, insbesondere für Lebensmittelprodukte sowie Verfahren zur Herstellung von wärmeisolierendem Verpackungsmaterial, insbesondere für Lebensmittelprodukte
Composition de revêtement de matériau d'emballage cellulosique, son procédé de préparation d'une composition de revêtement de matériau d'emballage cellulosique, matériau d'emballage calorifuge, en particulier pour des produits alimentaires, et procédé de préparation de matériau d'isolation thermique, en particulier pour des produits alimentaires

(30) Priority: 08.03.2012 PL 39836212
(43) Date of publication of application: 11.09.2013
(73) Proprietor: Zachodniopomorski Uniwersytet Technologiczny w Szczecinie, 70-310 Szczecin (PL)
(72) Inventor: Bartkowiak, Artur, 71-450 Szczecin (PL); Balejko, Jerzy, 72-006 Mierzyn (PL); Lisiecki, Slawomir, 72-006 Mierzyn (PL); Chojnacka, Maria, 71-453 Szczecin (PL)
(74) Representative: Zawadzka, Renata

(56) References cited:
- US-A- 4 435 344
- US-A- 5 928 741

## Description

The present invention provides a composition for coating a cellulosic packaging material containing the biodegradable materials such as starch, glycerol, and a method for preparing said composition for coating a cellulosic packaging material, in particular for food products. A preferred embodiment of the invention provides the heat-insulating packaging material, in particular for food products and a method for preparing heat-insulating material, in particular for food products. The material thereof is composed of a cellulosic material and a foamable coating from the biodegradable materials.

Over the past twenty years the studies concerning the foamed packaging obtained from biorenewable materials have been focused on the utilization of starch. There are four basic methods: extrusion, baking process, compression and compression-explosion process which have been used so far for manufacturing the biodegradable packaging materials having a porous-foamed structure.

It is well known from literature of Shogren et al., 1998: Lawton et al., 2004; Salgado et al., 2008; a method for making packaging, in which an aqueous suspension of starch with the additives is heated in the two-clamps mould. The only foaming agent is evaporating water. The products of this type are manufactured from the system with a high moisture content (70-80%), therefore, the baking process itself is a significantly longer (1-2 min) than the production of a similar packaging from polystyrene, what is the principal disadvantage of this method.

A similar method can be utilized for manufacturing foams from other biodegradable materials like, for example, poly(propylene carbonate), i.e., a copolymer formed from propylene oxide and carbon dioxide (Luinstra, 2008) with N,N'-dinitrozobenzmethylene used as a porophor and the addition of urea as decomposing activator (Guan et al., 2007). The cellulosic/starch packaging materials with a three-layer structure are currently being produced by Novamont SpA in Novara, Italy (Starch polymer appears in corrugated foam sheet, Plastics Technology, 1.08.2003). The corrugated cardboards with Mater-Bi foam based on the biodegradable polymers on the basis of starch have been introduced on the European market since 2002 year in the form of product called "Wave Mater-Bi". The closed-cell foam is formed as a result of foaming by means of water steam in an unconventional extrusion line engineered by Novamont. This method produces the compositions being directly foamed in the stage of extrusion.

US Patent No. 4435344 describes a method for producing the composites by coating paper with a resin or laminated with thermoplastic films. A surface of such material is then heated and joined with a foaming layer of heat-insulating polyethylene. US Patents 6030476 and 5840139 describe a method for producing beverage containers or cups, where the insulating layer is formed by the utilization of thermoplastic synthetic resin. A description of the invention US 6030476 provides a heat-insulating material containing a thermoplastic synthetic resin with a low or medium density, for example polyethylene, polyolefin, nylon and a high-density polyethylene layer impermeable to moisture, located on the paper surface. The materials having a similar construction with the heat-insulating layer, made of the synthetic materials are described in European patents EP 0940240 A2 and EP 1060879. US Patent 7,074,466 describes a method for manufacturing a composite material having the heat-insulating properties, which is based on a cardboard layer and an expended foam layer located on the cardboard substrate. The heat-insulating layers comprise the synthetic materials such as PVDC or AMM foams. This layer is formed at the stage of its coating. The well-known foamed biopolymer materials, primarily starch-based, regardless the used methods of manufacturing are characterized by a low flexibility and a relatively high susceptibility to absorb water steam. Moreover, in the state of being moist, after a long-term of conditioning in the environment with elevated moisture, the other properties of foamed starch undergo the deterioration, i.e., the resistance to breaking or tearing, therefore, the attempts to incorporate a number of additions improving the functional properties of material are still ongoing. Among numerous attempts described in the research papers the following should be mentioned:
- the application of plasticizers to improve the flexibility, where the primary plasticizers used for starch include glycerol, polyvinyl alcohol (Finkenstadt and Willett, 2004), ammonium chloride, sorbitol (Poutanen and Forssell, 1996; Funke et al., 1998),
- incorporating the fillers: aspen fibres (Glenn et al., 2001a; Shorgen et al., 2002; Lawton, 2004), clays (Wilhelm et al., 2003) and chalk (Glenn et al., 2001),
- the use of additives leading to the hydrophobization of starch: caprolactones (PCL) (Preechawong et al., 2004), polylactic acid (PLA) (Preechawong et al., 2005); such prepared materials are frequently treated as hybrid.

The others auxiliary agents such as anti-lumping substances (magnesium stearate) or those facilitating maintenance of the gas in the bubbles (guar rubber) (Shorgen et al., 1998) have been also used. In the case of first commercial biodegradable packaging available on the market, the protective coatings are frequently applied, the primary task of which is the protection of a hydroscopic biopolymer foam forming the fittings against moisture absorption and the improvement of the mechanical properties (Glenn et al., 2001b).

The present invention provides a composition for coating a cellulosic pachaging material containing, the biodegradable materials such as starch, glycerol which is characterized in that being a two-component mixture, whereby the first component comprises a mixture of starch, gelatine and glycerol or a mixture of glycerol and sorbitol, while the second component comprises a mixture of protein of animal or plant origin ingredients, porophors and optionally starch. The porophors comprise the bicarbonates of alkali metals or ammonium, and the mixtures thereof, or azodicarbonamide Starch may be added only as an ingredient of the first component or as the ingredient of both the first and the second component. If starch is the ingredient of both components, then in the first component a content thereof is in the range of 4-7% wt%. The amount of particular ingredients in the components is such that after the dissolution of both components in water, it permits to obtain a composition with the concentration of starch in the range of 10-17 wt%, gelatine in the range of 10-12 wt% glycerol or a mixture of glycerol and sorbitol in the range of 5-11 wt%, the concentration of protein components in the range of 5-10 wt% and the porophors in the range of 3-5.5 wt%. The protein components constitute the products of natural origin containing a protein of animal or plant origin, preferably egg albumin, highly foamable albumin, sodium caseinate, casein, milk proteins, soya proteins, zein, gluten, and the mixtures thereof. Another embodiment of the invention provides a method for preparing a composition for coating a cellulosic packaging material comprising a mixing of the biodegradable materials such as starch, glycerol, subjecting thereof to the thermal treatment, which is characterized in that, gelatine, glycerol or a mixture of glycerol and sorbitol and starch are dispersed in water using a mechanical stirrer, said mixture is then heated to a temperature in the range of 50-100° C to attain a uniform consistency. Next, the mixture is cooled down to a temperature in the range from 35 to 40°C with continuous stirring followed by adding the protein components and the porophors, and is stirred to obtain a uniform consistency. Such obtained composition is coated onto a cellulosic material. Gelatine, glycerol or a mixture of glycerol and sorbitol and starch are dispersed in water in such amount as to obtain an aqueous suspension with the concentration of starch in the range of 10-17 wt%, gelatine in the range of 10-12 wt%, glycerol or a mixture of glycerol and sorbitol in the range of 5-11 wt%. The protein components and the porophors are added to a coaled down mixture in such an amount that is required to obtain an aqueous suspension with the concentration of the protein components in the range of 5-10 wt%, the porophors in the range if 3-5.5 wt%.

In another embodiment of the invention, a portion of starch, gelatine and glycerol or a mixture of glycerol and sorbitol is dispersed in such amount as to obtain an aqueous suspension with the concentration of starch in the range of 4-7 wt%, gelatine in the concentration of starch in the range of 4-7 wt%, gelatine in the range of 10-12 wt% glycerol or a mixture of glycerol and sorbitol in the range 5-11 wt%. The remaining portion of starch, in such an amount that is required to obtain the final composition with the concentration of starch in the range of 10-17 wt%, is added to the mixture after cooling, together with the protein components and the porophors. As the protein components are used the products of natural origin containing a protein of animal or plant origin, preferable egg albumin, highly foamable albumin, sodium caseinate, casein, milk proteins, soya proteins, zein, gluten or the mixtures thereof. The porophors comprise the bicarbonates of alkali metals or ammonium, and the mixtures thereof, or azodicarbonamide.

A heat-insulating packaging material according to the invention, containing a cellulosic material coated by a layer of foamable coating is characterizing by that, said material has at least one layer of a foamable coating obtained from an aqueous suspension of starch with the concentration in the range of 10-17 wt%, gelatine with concentration in the range of 10-12 wt% glycerol or a mixture of glycerol and sorbitol with concentration in the range of 5-11 wt%, the protein components with concentration in the range of 50-10 wt%, the porophors in the range of 3-5.5 wt% which is coated on the cellulosic material. The protein components constitute the products of natural origin containing, a protein of animal or plant origin, preferably egg albumin, highly foamable albumin, sodium caseinate, casein, milk proteins, soya proteins, zein, gluten, and the mixtures thereof. The porophors comprise the bicarbonates of alkali metals or ammonium, and the mixtures thereof, or azodicarbonamide. A material may have an additional layer of a cellulosic material so that, the foamable coating is located between the cellulosic materials. The cellulosic material has the form of paper or cardboard with a basic weight in the range from 40 to 350 g/m².

Another embodiment of the invention provides a method for preparing a heat insulating packaging material, comprising a coating of cellulosic material by a coating from the biodegradable materials, drying and foaming, with is characterized by that, gelatine, glycerol or a mixture of glycerol and sorbitol and starch is dispersed in water using a mechanical stirrer, the mixture is heated to a temperature in the range of 50-100°C to obtain a uniforms consistency. The mixture is then cooled down to a temperature in the range from 35 to 40°C using a continuous stirring, followed by adding the protein components and the porophors. The stirring is used to attain a uniform consistency of the composition, and a cellulosic material is coated with at least one layer of such obtained composition. A coating of cellulosic material takes place by the utilization of classical methods by means of grooved rollers, coating presses, by the methods of offset and flexographic printing, coating with the use of knife or curtain. Additionally, in the case of composition in the form of paste with high viscosity, a method of direct extrusion can be used by the utilization of sheet die enabling the coating in the form of solid or intermittent layer. When coating is accomplished, a material is preliminary dried and is subjected to foaming with the application of known heating methods ensuring a uniform heating. Gelatine, glycerol or a mixture of glycerol and sorbitol and starch is dispersed in water in such an amount that is required to obtain an aqueous suspension with the concentration of starch in the range of 10-17 wt%, gelatine in the range of 10-12 wt%, glycerol or a mixture of glycerol and sorbitol in the range of 5-11 wt%. The protein components and the porophors are added to a cooled down mixture in such an amount that is required to obtain an aqueous suspension with the concentration of the protein components in the range of 5-10% and the porephores in the range of 3-5.5 wt%.

In another embodiment, according to the invention, a portion of starch, gelatine and glycerol is dispersed in water in such an amount that is required to obtain an aqueous suspension with the concentration of starch in the range of 4-7 wt%, gelatine in the range of 10-12 wt%, glycerol or a mixture of glycerol and sorbitol in the range of 5-11 wt%. The remaining portion of starch, sufficient to attain the final composition with the concentration of starch in the range of 10-17 wt%, is added to a mixture after cooling down together with the protein components and the porophors. The protein components comprise the products of natural origin containing a protein of animal or plant origin, preferably egg albumin, highly formable albumin, sodium caseinate, casein, milk protein, soya proteins, zein, gluten, and the mixtures thereof. The porophors comprise the bicarbonate of alkali metals or ammonium, the mixtures thereof, or azodicarbonamide. A temperature and time of preliminary drying is established depending on the applied porophor, so that a decomposition of the porophor takes place and simultaneously a thermal decomposition of other components does not take place. Preferably, a composition is coated onto a cellulosic material in the form of a thin layer having a constant or variable thickness and a basic weight from 5 to 200 g/m². Coating a composition in the form of layer with variable thickness in the form of alternating stripes limits a curling phenomenon of a cellulosic material occurring during drying. A foaming process of coating is carried out utilizing the heat energy of microwaves using a microwave oven or a conventional oven. In order to enhance the strength of material a foamable coating is additionally coated with a layer of a cellulosic material. Preferably, a cellulosic material is used in the form or paper or cardboard which has a basic weight in the range from 40 to 350 g/m².

All the aforementioned ingredients applied for preparing a foamable coating, in the form of biodegradable polymers, plasticizers, porophors, organic and mineral fillers, belong to the substances from a list of components permissible for contact with food.

The advantage of the embodiment according to the invention, is the possibility of preparing a modern heat-insulating composite packaging material for food with foamed insulation layer on the basis of component permissible for contact with food.

A composition according to the invention comprises a heat-insulating layer of natural origin, stiffening and preventing a product against a mechanical damage and having the capability of absorbing an excess of moisture. A significant importance also has the possibility of shifting in time the foaming process of a packaging, what enables foaming of finished packaging supplied by the manufactures in the form of the flat pattern just at the stage of product packing with the application of typical method of industrial heating and the conventional devices. The application of different porophors and the protein components causes that a composite with variable properties is obtained. A method of preparing a material by the utilization of the composite. A method of preparing a material by the utilization of the composite according to the invention enables the utilization of specially dedicated and conventional methods, including the standard devices for the modification of a surface applied in the paper and printing industry for the formation of coated cellulosic materials. Coating and a further thermal treatment does not deteriorate the original properties of the cardboard substrate.

The following examples will facilitate a more thorough understanding of the present invention and a compilation of the properties of selected obtained packaging materials is presented in table.

### Example 1

A suspension with the concentration of starch in the range of 10 wt%, gelatine in the range of 10 wt%, glycerol in the range of 5 wt% is mixed using a mechanical stirrer. Next, a mixture is heated to a temperature of 50°C in order to dissolve all the ingredients and then is cooled down to a temperature of 35°C. Subsequently, a protein component in the form of egg albumin, the porophors in the form of sodium bicarbonate were added to the mixture so that the concentration of the protein component in the mixture amounted to 5 wt%, whereas that of porophor 3 wt%. The mixture is mixed until a uniform composition is achieved. Such prepared composition is used for a one-side coating of paper having a basic weight of 50 g/m² by the utilization of coating press. One layer of coating in the form of a thin layer having a constant thickness and a basic weight of 10 g/m² is coated by means of knife. A material is then preliminary dried at a temperature of 25°C for about 20 h by the utilization of a well-known, arbitrary method used for paper drying. Such obtained composite is subjected to foaming by heating said composite in a microwave oven with power 90 W for 90 seconds.

### Example 2

A suspension with the concentration of starch in the range of 17 wt%, gelatine in the range of 11 wt%, glycerol in the range of 8 wt% is mixed using a mechanical stirrer. Next, a mixture is heated to a temperature of 80°C in order to dissolve all the ingredients and then is cooled down to a temperature of 35°C. Subsequently, a protein component in the form of highly foamable albumin, the porophors in the form of sodium bicarbonate were added to the mixture so that the concentration of the protein component in the mixture amounted to 8 wt%, whereas that of porophor 1 wt%. The mixture is mixed until a uniform composition is achieved. Such prepared composition is used for a one-side coating of cardboard having a basic weight of 350 g/m² by the utilization of grooved rollers. Two layer of coating in the form of a thin layer having a variable thickness and a basic weight of 200 g/m² is coated in the form of alternating stripes. A material is then preliminary dried at a temperature of 25°C for about 20 h by the utilization of a well-known, arbitrary method used for cardboard drying. Such obtained composite is subjected to foaming by heating said composite in a convective at a temperature of 170 for 90 seconds.

### Example 3

A suspension with the concentration of starch in the range of 4 wt%, gelatine in the range of 12 wt%, glycerol in the range of 10 wt% is mixed using a mechanical stirrer. Next, a mixture is heated to a temperature of 100°C in order to dissolve all the ingredients and then is cooled down to a temperature of 40°C. Subsequently, a protein component in the form of sodium caseinate, a porophor in the form of a mixture of sodium and potassium bicarbonate were added to the mixture so that the concentration of starch in amounted to 4 wt%, the protein component amounted to 10 wt% and a porophor amounted to 5wt%. The mixture is mixed until a uniform composition is achieved. Such prepared composition is used for a one-side coating of cardboard having a basic weight of 200 g/m² by the utilization of offset printing. A coating in the form of three thin layers having a variable thickness and a basic weight of 100 g/m² is coated in the form of alternating stripes. A material is then preliminary dried at a temperature of 25°C for about 20 h by the utilization of a well-known, arbitrary method used for cardboard drying. Such prepared composite is subjected to foaming by heating said composition in a conventional oven at a temperature of 170°C for 90 seconds.

### Example 4

A suspension with the concentration of starch in the range of 6 wt%, gelatine in the range of 12 wt%, glycerol in the range of 10 wt% is prepared, such prepared suspension is mixed using a mechanical stirrer and heated to a temperature of 100°C in order to dissolve all the ingredient, and then the suspension is cooled down to a temperature of 40°C. Next, in cold water is dispersed starch, a protein component in the form of sodium caseinate, a porophor in the form of mixture of sodium and potassium bicarbonate so that the concentration of starch in the mixture amounted to 6 wt%, the protein component amounted to 10 wt%, whereas that of porophor 5 wt%. The two dispersions are mixed until a uniform composition is achieved. Such prepared composition is used for a one-side coating of cardboard having a basic weight of 200 g/m² by the utilization of offset printing. One layer of coating in the form thin a thin layer having a constant thickness and a basic weight of 100 g/m² is coated by means of curtain. A material is then preliminary dried at a temperature of 25°C for about 20 h by the utilization of a well-known, arbitrary method used for paper drying. Such prepared composite is subjected to foaming by heating said composite in a microwave oven with power of 90 W for 90 seconds.

### Example 5

A suspension with the concentration of starch in the range of 12 wt%, gelatine in the range of 12 wt%, glycerol in the range of 11 wt% is mixed using a mechanical stirrer. Next, a mixture is heated to a temperature of 100°C in order to dissolve all the ingredients and then is cooled down to a temperature of 40°C. Subsequently, a protein component in the form of soya and milk protein (at the ratio of 1:1), a porophor in the form of azodicarbonamide were added to the mixture amounted to 7 wt%, the protein component amounted to 9 wt%, whereas that of porophor 5.5 wt%. The mixture is mixed until a uniform composition is achieved. Such prepared composition is used for a one-side coating of cardboard having a basic weight of 200 g/m² with utilization of offset printing. A coating in the form of tree thin layers having a variable thickness and a basic weight of 100 g/m² is coated in the form of alternating strips. A material in then preliminary dried as a temperature of 25°C for about 20 h by the utilization of a well-known, arbitrary method used for cardboard drying. Such prepared composition is subjected to foaming by heating said composition in a conventional oven at a temperature of 90°C for 90 seconds.

### Example 6

A suspension was prepared in the same manner with Example 5, except using a mixture of glycerol and sorbitol so that the fraction thereof amounted to 6 wt% and 3 wt% of porophor in the form of azodicarbonamide. A temperature of preliminary drying amounted to 25°C, a time amounted 20 h, a foaming temperature was 90°C, a foaming time was 90 seconds.

### Example 7

A suspension with the concentration of starch in the range of 7 wt%, gelatine in the range of 12 wt%, glycerol in the range of 11 wt% is prepared, then such prepared suspension is mixed using a mechanical stirrer and heated to a temperature of 100°C in order to dissolve all the ingredients. Next, a mixture is cooled down to a temperature of 40°C and is added a protein component in the form of a mixture of soya and milk protein at the ratio of 1:3, a porophor in the form of azodicarbonamide so that the concentration of starch in the mixture amounted to 7 wt%, a protein component amounted to 9 wt%, whereas that of porophor 5.5 wt%. Such obtained composition is used for a one-side coating cardboard having a basic weight of 200 g/m². A material is then preliminary dried at a temperature of 25°C for about 20 h by the utilization of a well-known, arbitrary method used for paper drying. Such prepared composite is subjected to foaming by heating said composite in a microwave oven power of 90 W for 90 seconds.

### Example 8

A suspension was prepared in the same manner Example 6 except instead of glycerol and sorbitol is used glycerol, so that a fraction thereof amounted to 6 wt% and a porophor is used in the form of azodicarbonamide in the range of 3 wt%. A temperature of preliminary drying amounted to 25C, a time amounted to about 20 h. Due to the application of azodicarbonamide as a porophor, a lower temperature can be applied during foaming in a conventional oven (90°C, foaming time of 90 seconds).

### Example 9

A suspension was prepared in the same manner with Example 1, except casein is used as the protein component, and ammonium bicarbonate is used as a porophor. A temperature of preliminary drying amounted to 25°C, the time amounted to 90 seconds.

### Example 10

A suspension was prepared in the same manner with Example 1 except soya protein is used was the protein component, and a mixture of sodium bicarbonate with potassium bicarbonate is used as a porophor. A temperature of preliminary drying amounted to 25°C, the time amounted to about 20 h, foaming temperature of 170°C, foaming time 90 seconds.

### Example 11

A suspension was prepared in the same manner with Example 1, excepted gluten is used as the protein component, and potassium bicarbonate is used as a porophor. A temperature of preliminary drying amounted to 25°C, the time amounted about 15 h, foaming temperature of 170°C, foaming time of 90 seconds.

**Table**

| Ingredient | | | A | B | C | D | E | F |
|---|---|---|---|---|---|---|---|---|
| Potato starch [%] | | | 17 | | | 7 | | |
| Gelatine [%] | | | 10 | | | 12 | | |
| Glycerol and/or sorbitol [%] | | | 5 | | | 6 | 11 | |
| Protein components [%] | a) milk protein | | 7.5 | | | 9 | | |
| | b) soya protein | | | | | | | |
| Ratio w/w of protein components (a:b) | | | 1:0 | 3:1 | 1:1 | 1:0 | 3:1 | 1:3 |
| Porophor fraction [%] | | | 4.2 | | | 3 | 5.5 | |
| Dry matter [g] | | | 43.7 | | | 44 | | |
| Starch fraction in dry matter [%] | | | 38 | | | 27 | | |
| Cellulosic layers [g/m²] | Cardboard | | 320 | | | | | |
| | Paper | | 80 | | | | | |
| | | | solid layer | | | | | |
| | | Average | 491 | 136 | 462 | 342 | 70 | 348 |
| | Microwave heating | STDN | 79.5 | 28.0 | 131.1 | 50.3 | 27.7 | 47.6 |
| | | | stripped layer | | | | | |
| | | Average | 326 | 93 | 108 | 96 | 64 | 147 |
| Increase in weight* [%] | | STDN | 91.183 | 48.748 | 13.868 | 52.918 | 34.530 | 44.467 |
| | | | solid layer | | | | | |
| | | Average | 498 | 437 | 225 | 299 | 138 | 495 |
| | Conventional heating | STDN | 52.975 | 7.371 | 7.234 | 12.858 | 7.024 | 124.179 |
| | | | stripped layer | | | | | |
| | | Average | 309 | 267 | 241 | 165 | 139 | 146 |
| | | STDN | 40.415 | 40.513 | 12.741 | 31.607 | 3.786 | 49.943 |
| | Microwave heating | Average | Samples underwent destruction during a preliminary pressure of 5N before starting a principal test. | | | 191.663 | 63.87 | 113.92 |
| ECT* [N/m] | | STDN | | | | 49.832 | 18.522 | 30.758 |
| | Conventional heating | Average | | | | 100 | 242 | 242.49 |
| | | STDN | | | | 25 | 55.66 | 67.897 |
| | Microwave heating | Average | 0.13 | 0.173 | 0.325 | 0.557 | 0.77 | 0.737 |
| FCT* [kN] | | STDN | 0.016 | 0.031 | 0.032 | 0.021 | 0.172 | 0.05 |
| | Conventional heating | Average | 0.137 | 0.117 | 0.18 | 0.423 | 0.583 | 0.913 |
| | | STDN | 0.026 | 0.065 | 0.111 | 0.074 | 0.211 | 0.55 |
| | Smooth | Average | 0.528 | 0.625 | 1.093 | 3.698 | 2.608 | 4.27 |
| Bending force* [N] | | STDN | 0.103 | 0.057 | 0.138 | 1.695 | 0.767 | 1.764 |
| | Grooved | Average | 0.408 | 0.625 | 0.73 | 1.64 | 2.588 | 1.05 |
| | | STDN | 0.109 | 0.218 | 0.135 | 0.993 | 0.270 | 0.455 |
| | | | solid layer | | | | | |
| | | Average | 0.21 | 0.35 | 0.44 | 0.75 | 0.50 | 0.51 |
| | Microwave heating | STDN | 0.114 | 0.002 | 0.009 | 0.014 | 0.004 | 0.003 |
| | | | stripped layer | | | | | |
| Steam absorption* [g/m²] | | Average | 0.42 | 0.39 | 0.35 | 0.78 | 0.27 | 0.70 |
| | | STDN | 0.013 | 0.000 | 0.012 | 0.010 | 0.007 | 7.071 |
| | | | solid layer | | | | | |
| | | Average | 0.26 | 0.31 | 0.46 | 0.58 | 0.51 | 0.45 |
| | Conventional heating | STDN | 0.001 | 0.005 | 0.008 | 0.020 | 0.005 | 0.004 |
| | | | stripped layer | | | | | |
| | | Average | 0.44 | 0.39 | 0.33 | 0.58 | 0.26 | 0.70 |
| | | STDN | 0.012 | 0.008 | 0.007 | 0.012 | 0.009 | 0.003 |

## Claims

1. A composition for coating a cellulosic packaging material containing the biodegradable materials such as starch, glycerol, **wherein** said composition comprises a two-component mixture, whereby the first component comprises a mixture of starch, gelatine and glycerol or a mixture of glycerol and sorbitol, while the second component comprises a mixture of protein of animal or plant origin ingredients, the porophors, which comprise the bicarbonates of alkali metals or ammonium, and the mixtures thereof, or azodicarbonamide and optionally starch, whereby the amount of particular ingredients in the components is so that after the dissolution of both components in water, it permits to obtain a composition with the concentration of starch in the range of 10-17 weight%, gelatine in the range of 10-12 weigh%, glycerol or a mixture of glycerol and sorbitol in the range of 5-11 weigh%, the protein components in the range of 5-10 weigh% and the porophors in the range of 3-5.5 weigh%.

2. A composition according to claim 1, **wherein** the protein components are of natural origin containing said protein of animal or plant origin, preferably egg albumin, highly foamable albumin, sodium caseinate, casein, milk protein, soya protein, zein, gluten, or the mixtures thereof.

3. A method for preparing a composition for coating a cellulosic packaging material comprising a mixing of the biodegradable materials such as starch, glycerol, subjecting thereof to the thermal treatment, **wherein** gelatine, glycerol or a mixture of glycerol and sorbitol and starch are dispersed in water using a mechanical stirrer, then said mixture is heated to a temperature in the range of 50-100° C until a uniform consistency is achieved, the mixture is then cooled down to a temperature in the range from 35 to 40°C with continuous stirring followed by adding the protein components and the porophors.

4. A method according to claim 3, **wherein** gelatine, glycerol or a mixture of glycerol and sorbitol and starch are dispersed in water in such amount to obtain an aqueous suspension with the concentration of starch in the range of 10-17 weigh%, gelatine in the range of 10-12 weigh%, glycerol or a mixture of glycerol and sorbitol in the range of 5-11 weigh%.

5. A method according to claim 3, **wherein** the protein components and the porophors are added to cooled down mixture in such amount to obtain an aqueous suspension with the concentration of protein components in the range of 5-10 weigh%, the porophors in the range of 3-5.5 weigh%.

6. A method according to claim 3, **wherein** gelatine, glycerol or a mixture of glycerol and sorbitol and starch are dispersed in water in such amount to obtain an aqueous suspension with the concentration of starch in the range of 4-7 weigh%, gelatine in the range of 10-12 weigh%, glycerol or a mixture of glycerol and sorbitol in the range of 5-11 weigh%, whereby a portion of starch is added in such amount to said mixture after cooling down together with the protein components and the porophors to obtain the final concentration of starch in the range of 4-7 weigh%.

7. A method according to claim 3, **wherein** the protein components are of natural origin containing said protein of animal or plant origin, preferably egg albumin, highly foamable albumin, sodium caseinate, casein, milk protein, soya protein, zein, gluten, or the mixtures thereof.

8. A method according to claim 3, **wherein** the porophors comprise the bicarbonates of alkali metals or ammonium, and the mixtures thereof, or azodicarbonamide.

9. A heat-insulating packaging material, in particular for the food products containing a cellulosic material coated by a layer of foamable coating **wherein** said material has a least one layer of a foamable coating obtained from the composition described in claims 1 to 2 coated on the cellulosic material.

10. A heat-insulating material according to claim 9, **wherein** said material has an additional layer of a cellulosic material.

11. A heat-insulating material according to claim 9 or 10, **wherein** said cellulosic material has the form of paper or cardboard having a basic weight in the range of 40 to 350 g/m².

12. A method for preparing a heat-insulating packaging material, in particular for the food products containing a layer of foamable coating, whereby a cellulosic material is coated by a coating from the biodegradable materials, drying and foaming, **wherein** said cellulosic material is a one-side coated by at least one layer of the composition obtained by said method according to claims 3-8, said material is preliminary dried and subjected to foaming using known heating methods ensuring a uniform heating.

13. A method according to claim 12, **wherein** a temperature and a time of preliminary drying is established depending on the used porophor, so that the decomposition thereof does not take place.

14. A method according to claim 12, **wherein** a temperature and the foaming time are established, so that the decomposition of the porophor takes place and simultaneously the decomposition of other components does not take place.

15. A method according to claim 12, **wherein** said composition is coated on a cellulosic material in the form of a thin layer having a constant or variable thickness and a basic weight in the range from 5 to 200 g/m².

16. A method according to claim 12, **wherein** said composition is coated on the cellulosic material as a layer of variable thickness in the form of alternative strippers.

17. A method according to claim 12, **wherein** said composition is foamed using a microwave oven or a conventional oven.

18. A method according to claim 12, **wherein** said foamable coating is additionally coated by a layer of cellulosic material.

19. A method according to claim 12 or 18, **wherein** the cellulosic material is used in the form of paper or cardboard having a Basic weight in the range from 40 to 350 g/m².

## Patentansprüche

1. Zusammensetzung der Beschichtung des Zellulose-Verpackungsmaterials enthält die Materialien, welche dem Bioabbau, wie Stärke und Glycerol unterliegen, **dadurch gekennzeichnet, dass** die bereits erwähnte Zusammensetzung ein Gemisch aus zwei Bestandteilen umfasst, wo der erste Bestandteil ein Gemisch aus Stärke, Gelatine und Glycerol bzw. ein Gemisch aus Glycerol und Sorbit und der zweite Bestandteil ein Gemisch aus tierischem oder pflanzlichem Eiweiß, Treibmitteln darstellt, das Hydrogencarbonate, Alkalimetalle oder Ammonium und ihre Gemische bzw. Azodicarboxamid und optional Stärke enthält, wo die Menge der einzelnen Komponenten der Bestandteile so ist, dass man nach dem Auflösen beider Bestandteile in Wasser eine Zusammensetzung mit der Konzentration der Stärke im Bereich von 10-17 Gew.-%, Gelatine im Bereich von 10-12 Gew.-%, Glycerol bzw. Gemisch aus Glycerol und Sorbit im Bereich von 5-11 Gew.-%, Eiweiß-Komponenten im Bereich von 5-10 Gew.-% und Treibmittel im Bereich von 3-5,5 Gew.-% gewinnen kann.

2. Zusammensetzung nach Anspruch 1, **dadurch gekennzeichnet, dass** die Eiweiß-Bestandteile natürlicher Herkunft sind und das erwähnte tierische oder pflanzliche Eiweiß, am besten Albumin aus Hühnerei, ein sehr aufgeschäumtes Albumin, Natriumcaseinat, Casein, Eiweiß aus Milch, aus Soja, Zein, Gluten oder ihre Gemische umfasst werden.

3. Methode zur Herstellung der Zusammensetzung der Beschichtung des Zellulose-Verpackungsmaterials - das aus einem Gemisch der Materialien besteht, die dem Bioabbau wie Stärke, Glycerol unterliegen - bestehend darin, dass sie der Wärmebehandlung untergezogen werden, **dadurch gekennzeichnet, dass** die Gelatine, Glycerol bzw. Gemisch aus Glycerol und Sorbit und Stärke in Wasser mit Hilfe eines mechanischen Rührwerkes aufgelöst wird und danach das bereits erwähnte Gemisch bis zu einer Temperatur von 50-100° C, bis zur Erreichung einer einheitlichen Konsistenz erhitzt wird und danach bis zu einer Temperatur von 35 bis 40°C unter ständigem Rühren abgekühlt wird und danach die Zugabe von Eiweiß-Komponenten und Treibmitteln erfolgt.

4. Methode nach Anspruch 3, **dadurch gekennzeichnet, dass** die Gelatine, Glycerol bzw. Gemisch aus Glycerol und Sorbit und Stärke in Wasser in einer solchen Menge aufgelöst wird, um eine wässrige Suspension mit einer Konzentration der Stärke im Bereich von 10-17 Gew.-%, Gelatine im Bereich von 10-12 Gew.-%, Glycerol bzw. Gemisch aus Glycerol und Sorbit im Bereich von 5-11 Gew.-% zu gewinnen.

5. Methode nach Anspruch 3, **dadurch gekennzeichnet, dass** die Eiweiß-Komponenten und Treibmittel dem abgekühlten Gemisch in einer solchen Menge zugegeben werden, um eine wässrige Suspension mit einer Konzentration der Eiweiß-Komponenten im Bereich von 5-10 Gew.-%, Treibmittel im Bereich von 3-5,5 Gew.-% zu gewinnen.

6. Methode nach Anspruch 3, **dadurch gekennzeichnet, dass** die Gelatine, Glycerol bzw. Gemisch aus Glycerol und Sorbit und Stärke in Wasser in einer solchen Menge aufgelöst wird, um eine wässrige Suspension mit einer Konzentration der Stärke im Bereich von 4-7 Gew.-%, Gelatine im Bereich von 10-12 Gew.-%, Glycerol bzw. Gemisch aus Glycerol und Sorbit im Bereich von 5-11 Gew.-% zu gewinnen, wo ein Teil der Stärke in einer solchen Menge dem bereits erwähnten Gemisch nach dem Abkühlen samt den Eiweiß-Komponenten und Treibmitteln zugegeben wird, um die endgültige Konzentration der Stärke im Bereich von 4-7 Gew.-% zu gewinnen.

7. Methode nach Anspruch 3, **dadurch gekennzeichnet, dass** die Eiweiß-Bestandteile natürlicher Herkunft sind und das erwähnte tierische oder pflanzliche Eiweiß, am besten Albumin aus Hühnerei, ein sehr aufgeschäumtes Albumin, Natriumcaseinat, Casein, Eiweiß aus Milch, aus Soja, Zein, Gluten oder ihre Gemische umfasst werden.

8. Methode nach Anspruch 3, **dadurch gekennzeichnet, dass** die Treibmittel Alkalimetalle oder Ammonium und ihre Gemische bzw. Azodicarboxamid umfassen.

9. Wärmeisolierendes Verpackungsmaterial, insbesondere für die Lebensmittel, enthält ein Zellulosematerial, das mit einer Schicht der aufgeschäumten Beschichtung überzogen ist, wo das bereits erwähnte Material zumindest eine Schicht der aufgeschäumten Beschichtung besitzt - welche so gewonnen wurde, wie in den Ansprüchen 1 und 2 beschrieben ist - die auf dem Zellulosematerial aufgetragen wird.

10. Wärmeisolierendes Material nach Anspruch 9, **dadurch gekennzeichnet, dass** das bereits erwähnte Material eine zusätzliche Schicht des Zellulosematerials besitzt.

11. Wärmeisolierendes Material nach Anspruch 9 oder 10, **dadurch gekennzeichnet, dass** das bereits erwähnte Zellulosematerial die Form des Papiers bzw. der Pappe mit dem spezifischen Gewicht im Bereich von 40 bis 350 g/m²besitzt.

12. Methode zur Herstellung von wärmeisolierendem Verpackungsmaterial, insbesondere für die Lebensmittel, das eine Schicht der aufgeschäumten Beschichtung besitzt, wo das Zellulosematerial mit den dem Bioabbau unterliegenden, abgetrockneten und aufgeschäumten Materialien überzogen ist, **dadurch gekennzeichnet, dass** das bereits erwähnte Zellulosematerial einseitig mit zumindest einer Schicht überzogen ist, die dank der erwähnten Methode nach Ansprüchen 3-8 gewonnen wurde und das bereits erwähnte Material vorgetrocknet und aufgeschäumt wird, wobei die bekannte Methode zur Erhitzung eingesetzt wird, um eine einheitliche Erhitzung zu sichern.

13. Methode nach Anspruch 12, **dadurch gekennzeichnet, dass** die Temperatur und die Zeit der Vortrocknung in Abhängigkeit von dem eingesetzten Treibmittel festgelegt werden, damit seiner Zersetzung vorgebeugt wird.

14. Methode nach Anspruch 12, **dadurch gekennzeichnet, dass** die Temperatur und die Zeit so festgelegt werden, damit die Zersetzung des Treibmittels erfolgt und gleichzeitig keine anderen Komponenten zersetzt werden.

15. Methode nach Anspruch 12, **dadurch gekennzeichnet, dass** die Beschichtung auf das bereits erwähnte Zellulosematerial in Form einer dünnen Schicht mit der unveränderlichen oder veränderlichen Dicke und dem spezifischen Gewicht im Bereich von 5 bis 200 g/m² aufgetragen wird.

16. Methode nach Anspruch 12, **dadurch gekennzeichnet, dass** die Beschichtung auf das bereits erwähnte Zellulosematerial als eine Schicht mit der veränderlichen Dicke in Form von abwechselnden Streifen aufgetragen wird.

17. Methode nach Anspruch 12, **dadurch gekennzeichnet, dass** die Beschichtung mit Hilfe eines Mikrowellenherdes oder eines konventionellen Herdes aufgeschäumt wird.

18. Methode nach Anspruch 12, **dadurch gekennzeichnet, dass** die aufgeschäumte Beschichtung zusätzlich mit einer Schicht des Zellulosematerials überzogen wird.

19. Methode nach Anspruch 12 oder 18, **dadurch gekennzeichnet, dass** das Zellulosematerial in Form von Papier oder Pappe mit dem spezifischen Gewicht im Bereich von 40 bis 350 g/m² eingesetzt wird.

## Revendications

1. La composition de l'enrobage du matériau de conditionnement cellulosique qui contient des matériaux biodégradables, comme l'amidon, le glycérol **se caractérise par le fait que** la composition ci-dessus embrasse la mélange de double éléments, où le premier ingrédient représente la mélange de l'amidon, de la gélatine et du glycérol soit la mélange du glycérol et du sorbitol, par contre le deuxième constitue la mélange de la protéine d'origine animale ou végétale et des moyens de moussage qui inclut les bicarbonates, les métaux alcalins soit l'ammonium et leurs mélanges ou l'azodicarbonamide et l'amidon facultativement où la quantité des ingrédients particuliers est telle qu'après la dilution de double coefficients dans l'eau, on peut parvenir la composition avec la concentration de l'amidon dans l'étendue de 10 à 17% des pondérations, de la gélatine dans la portée de 10 à 12% des pondérations, du glycérol soit de la mélange du glycérol et du sorbitol dans l'ampleur de 5 à 11% des pondérations, des ingrédients albumineux dans l'attribution de 5 à 10% pondérations et des moyens de moussage dans la boussole de 3 à 5,5 % des pondérations.

2. La composition conformément à la première réserve **se caractérise par le fait que** les éléments albumineux sont d'origine naturelle, en embrassant la protéine susdite d'origine animale soit végétale, le mieux la conglycinine, l'albumine mousseuse fortement, le caséinate de sodium, la caséine, la lactoprotéine, le soja, la gliadine, le gluten soit leurs méllanges.

3. La méthode de préparation de la composition de l'enrobage du matériau de conditionnement cellulosique qui se compose des mélanges des matériaux biodégradables comme l'amidon, le glycérol, elle consiste à leur soumission du traitement thermique **se caractérise par le fait que la** gélatine, le glycérol soit la mélange du glycérol, du sorbitol et de l'amidon sont solubles dans l'eau au moyen de l'agitateur mécanique, ensuite la mélange susmentionnée est chauffée jusqu'à la température parmi de 50 à 100°C pour obtenir la consistance uniforme et puis elle est refroidie jusqu'à la température de 35 à 40°C en mêlant constamment, après les ingrédients albumineux et les moyens de moussage sont ajoutés.

4. La méthode conformément à la troisième réserve **se caractérise par le fait que** la gélatine, le glycérol soit la mélange du glycérol, du sorbitol et de l'amidon, ils sont dissous dans l'eau en telle quantité pour revevoir la suspension aqueuse de la concentration de l'amidon dans le domaine de 10 à 17% des pondérations, de la gélatine dans le cercle de 10 à 12% des pondérations, du glycérol soit la mélange du glycérol et du sorbitol dans l'étendue de 5 à 11% des pondérations.

5. La méthode conformément à la troisième réserve **se caractérise par le fait que** les ingrédients albumineux et les moyens de moussage sont ajoutés à la mélange refroidie en telle quantité pour obtenir la suspension aqueuse de la concentration des éléments albumineux dans l'ampleur de 5 à 10 % des pondérations et des moyens de moussage dans la portée de 3 à 5,5 % des pondérations.

6. La méthode conformément à la troisième réserve **se caractérise par le fait que** la gélatine, le glycérol soit la mélange du glycérol, du sorbitol et de l'amidon sont dissous dans l'eau en telle quantité pour obtenir la suspension aqueuse de la concentration de l'amidon dans le domaine de 4 à 7% des pondérations, de la gélatine dans l'étendue de 10 à 12% des pondérations, du glycérol soit la mélange du glycérol et du sorbitol dans la portée de 5 à 11% des pondérations où la part de l'amidon est ajoutée en telle quantité à la mélange susdite après le refroidissement avec les éléments albumineux et les moyens de moussage pour obtenir finalement la concentration de l'amidon dans le domaine de 4 à 7% des pondérations.

7. La méthode conformément à la troisième réserve **se caractérise par le fait que** les éléments albumineux sont d'origine naturelle en embrassant la protéine susdite d'origine animale ou végétale, le mieux la conglycinine, l'albumine mousseuse fortement, le caséinate de sodium, la caséine, la lactoprotéine, le soja, la gliadine, le gluten soit leurs méllanges.

8. La méthode conformément à la troisième réserve **se caractérise par le fait que** les moyens de moussage embrassent les métaux alcalins et leurs mélanges soit l'azodicarbonamide.

9. Le matériau de conditionnement qui isole la chaleur, en particulier aux produits alimentaires, qui inclut le matériau cellulosique enduit de la couche de l'enrobage mousseux **où** le matériau susdit possède au moins une couche de l'enrobage mousseux obtenue, comme on a décrit dans les premières à deuxièmes réserves, située sur le matériau cellulosique.

10. Le matériau qui isole la chaleur conformément à la neuvième réserve **se caractérise par le fait que** le matériau au-dessus possède une couche supplémentaire du matériau cellulosique.

11. Le matériau qui isole la chaleur conformément à la neuvième soit la dixième réserve **se caractérise par le fait que** le matériau cellulosique susdit possède la forme du papier ou du carton du fardeau convenable dans le domaine de 40 à 350 g/m².

12. La méthode de préparation du matériau de conditionnement qui isole la chaleur, en particulier aux articles alimentaires, contenant une couche de l'enrobage mousseux, dans lequel le matériau cellulosique est enduit des matériaux biodégradables qui sont asséchées et mousseuses, elle **se caractérise par le fait que** le matériau cellulosique ci-dessus est couvert unilatéralement au moins d'une couche obtenue à travers la méthode susdite conformément aux réserves de 3 à 8, le matérial précédent est asséché provisoirement et il ressort du moussage en exploitant la méthode connue du chauffage pour assurer l'échauffement uniforme.

13. La méthode conformément à la douzième réserve **se caractérise par le fait que** la température et le temps de la dessiccation préliminaire sont fixés du moyen du moussage adapté tellement pour prévenir sa décomposition.

14. La méthode conformément à la douzième réserve **se caractérise par le fait que** la température et le temps sont fixés tellement pour la décomposition du moyen du moussage suivra et pour la décomposition d'autres éléments ne suivra pas dans le même temps.

15. La méthode conformément à la douzième réserve **se caractérise par le fait que** l'enrobage est mis sur le matériau cellulosique susmentionné sous forme de la couche fine de l'épaisseur constante ou variable et du fardeau convenable dans le domaine de 5 à 200 g/m².

16. La méthode conformément à la douzième réserve **se caractérise par le fait que** l'enrobage est mis sur le matériau cellulosique ci-dessus comme la couche de l'épaisseur variable sous forme des rayures inalternatives.

17. La méthode conformément à la douzième réserve **se caractérise par le fait que** l'enrobage est mousseux par le four à micro-ondes soit conventionel.

18. La méthode conformément à la douzième réserve **se caractérise par le fait que** l'enrobage mousseux est couvert accessoirement de la couche du matériau cellulosique.

19. La méthode conformément à la douzième soit à la dix-huitième réserve **se caractérise par le fait que** le matériau cellulosique est utilisé sous forme du papier soit du carton du fardeau convenable dans l'étendue de 40 à 350 g/m².
